# EUROPÄISCHE PATENTANMELDUNG

(11) **EP 0 972 966 A2**
(43) Veröffentlichungstag der Anmeldung: **19.01.2000**
(21) Anmeldenummer: 99109198.4
(22) Anmeldetag: 10.05.1999
(51) Int. Cl.: F16F 15/14

(54) **Drehzahladaptiver Schwingungstilger**

(30) Priorität: 11.07.1998 DE 19831155
(71) Anmelder: Firma Carl Freudenberg, 69469 Weinheim (DE)
(72) Erfinder: Eckel, Hans-Gerd, Dr., 69514 Laudenbach (DE); Prestel, Wolfgang, 69469 Weinheim (DE)

(57) **Zusammenfassung**

Drehzahladaptiver Schwingungstilger für um eine Achse (1) rotierbare Wellen, umfassend ein Nabenteil (2), an dem eine Anzahl in Umfangsrichtung benachbarter Trägheitsmassen (3) auf Kurvenbahnen bewegbar sind, die der Achse (1) in Umfangsrichtung beiderseits zunehmend derart angenähert sind, daß sich bei Einleitung von Drehschwingungen eine Veränderung des Abstandes der Trägheitsmassen (3) von der Achse (1) ergibt, wobei die Trägheitsmassen (3) auf dem Nabenteil (2) durch Federelemente (4) in axialer Richtung federnd abgestützt sind.

## Beschreibung

### Technisches Gebiet

Die Erfindung betrifft einen drehzahladaptiven Schwingungstilger für um eine Achse rotierbare Wellen, umfassend ein Nabenteil, an dem eine Anzahl in Umfangsrichtung benachbarter Trägheitsmassen auf Kurvenbahnen bewegbar ist, die der Rotationsachse in Umfangsrichtung beiderseits zunehmend derart angenähert sind, daß sich bei Einleitung von Drehschwingungen eine Veränderung des Abstandes der Trägheitsmassen von der Achse ergibt.

### Stand der Technik

Ein solcher drehzahladaptiver Schwingungstilger ist aus der DE-A 196 04 160 bekannt. Dieser weist eine breitbandige Tilgerwirkung auf in bezug auf Drehschwingungen, die eine Rotationsbewegung überlagern.

### Darstellung der Erfindung

Der Erfindung liegt die Aufgabe zugrunde, einen drehzahladaptiven Schwingungstilger der eingangs genannten Art derart weiterzuentwickeln, daß sich ein erweitertes Wirkungsspektrum ergibt.

Diese Aufgabe wird erfindungsgemäß bei einem drehzahladaptiven Schwingungstilger mit den kennzeichnenden Merkmalen von Anspruch 1 gelöst. Auf vorteilhafte Ausgestaltungen nehmen die Unteransprüche Bezug.

Bei dem erfindungsgemäßen, drehzahladaptiven Schwingungstilger ist es vorgesehen, daß die Trägheitsmassen auf dem Nabenteil durch Federelemente in axialer Richtung federnd abgestützt sind. Der drehzahladaptive Schwingungstilger weist durch diese Ausbildung zusätzlich zu der bisher bereits bekannten Funktion in bezug auf die breitbandige Tilgung von Drehschwingungen, die eine Rotationsbewegung überlagern, eine Tilgerwirkung auf in bezug auf Biegeschwingungen (Taumeln) und Axialschwingungen einer Welle. Dabei geht die Erfindung aus von der Erkenntnis, daß drehzahladaptive Schwingungstilger der hier zur Diskussion stehenden Art gewöhnlich am Ende einer Welle montiert sind und daß die dem Nabenteil zugeordneten Trägheitsmassen stets einen mehr oder weniger großen Abstand von der Achse haben. Bei Nickbewegungen des Wellenendes, die durch eine belastungsbedingte Durchbiegung im mittleren Bereich der Welle verursacht sind, versuchen die Trägheitsmassen in ihrer ursprünglichen, radialen Zuordnungsposition zu der Achse zu beharren mit der Folge, daß sich eine elastische Deformierung der erfindungsgemäßen Federelemente ergibt. Diese elastische Deformierung wird im Rahmen der Erfindung durch eine gezielte Abstimmung dazu benutzt, schwingungsbedingte Nickbewegungen des Wellenendes im Resonanzbereich zu unterdrücken, indem die Federelastizität der Federelemente so mit der Größe der Trägheitsmassen in Übereinstimmung gebracht wird, daß sich beim Auftreten eines entsprechenden Betriebszustandes eine der erregenden Nickbewegung entgegengesetzter Relativverschiebung der Trägheitsmassen auf den Federelementen in axialer Richtung ergibt. Die dabei freigesetzten Kräfte bewirken eine Verminderung der erregenden Schwingungen. Resonanzüberhöhte Schwingungsausschläge des Wellenendes können dadurch nicht mehr auftreten.

Die breitbandige Tilgerwirkung in bezug auf Drehschwingungen, die der Rotationsbewegung der Welle überlagert sind, wird hierdurch nicht beeinträchtigt.

In funktionstechnischer Hinsicht und unter Kostengesichtspunkten hat es sich als vorteilhaft bewährt, wenn die Trägheitsmassen in axialer Richtung nur auf einer Seite durch Federelemente abgestützt sind. Die Federelemente müssen dabei in bezug auf axial gerichtete Zug- und Druckbelastungen elastisch sein.

Eine höhere Betriebssicherheit läßt sich demgegenüber in vielen Fällen erzielen, wenn die Trägheitsmassen in axialer Richtung beiderseits durch entsprechende Federelemente abgestützt sind.

Die Federelemente können im einfachsten Fall durch Schraubenfedern gebildet sein. Da jedoch bei der vorliegenden Bauform die axiale Relativverschiebbarkeit der Trägheitsmassen von einer betriebsbedingten Relativverschiebbarkeit überlagern ist, die sich auf die Umfangs- und Radialrichtung bezieht, ergeben sich in konstruktiver Hinsicht Vorteile, wenn die Federelemente durch Gleitkuven des Gehäuses und/ oder der Trägheitsmassen gebildet sind, die radial und in Umfangsrichtung verschiebbar auf den Trägheitsmassen beziehungsweise dem Gehäuse abgestützt sind.

Bei einer Bauform, bei der die Trägheitsmassen durch achsparallele Bolzen geführt sind, die bei Einleitung von Drehschwingungen in kurvenförmigen Lagerschalen des Nabenteils und der Trägheitsmassen axial geführt abwälzbar sind, hat es sich als vorteilhaft bewährt, wenn die Lagerschalen gegen die Kraft der Federelemente axial verschiebbar in den Trägheitsmassen beziehungsweise in dem Nabenteil aufgenommen sind. Entsprechende Federelemente können durch Tellerfedern gebildet sein, bedarfsweise aber auch aus Gummi bestehen.

Um die Relativvbeweglichkeit der Trägheitsmassen nicht durch Luftströmungen oder andere Sekundärwirkungen beeinträchtigen zu lassen hat es sich als vorteilhaft bewährt, wenn sie in einer ringförmigen Kammer des Nabenteils eingeschlossen sind. Die Kammer kann dabei flüssigkeitsdicht nach außen abgeschlossen sein und ein gewisses Volumen eines Schmierstoffes enthalten, bespielsweise eines Öls, um unter Vermeidung von Verschleiß eine besonders gute Relativbeweglichkeit der beweglichen Teile zu erhalten.

Die Trägheitsmassen können in axialer Richtung beiderseits von einem zentral angeordneten, flanschartig gestalteten Nabenteil angeordnet sein. Eine solche Bauform zeichnet sich durch ein besonders günstiges Leistungsgewicht aus insofern, als sie es erleichtert, den Anteil zu vergrößern, den die für die Funktion besonders wichtigen Trägheitsmassen am Gesamtgewicht einnehmen.

Falls die Federelemente durch Gleitkuven gebildet sind besteht die Möglichkeit, sie aus polymeren Werkstoffen zu erzeugen und gegebenenfalls durch unmittelbare Anformung mit den Trägheitsmassen oder dem Nabenteil zu verbinden. Hinsichtlich der Herstellung und Montage können sich dadurch Vorteile ergeben. Polymeren Werkstoffe neigen jedoch je nach Art im Laufe der Zeit unter andauernder, elastischer Deformierung insbesondere bei höheren Temperaturen zum relaxieren, was im bezug auf die im Rahmen der Erfindung angestrebte, dauerhafte Qualität der Tilgerwirkung wenig befriedigend ist. Die Anwendung von Gleitkufen aus Metall wird daher bevorzugt. Dabei kann die Feder- und die Gleitfunktion in konstruktiver Hinsicht unterschiedliche Teillösungen erfordern und zum Beispiel zu einer Ausgestaltung führen, bei der als Federelement eine Blattfeder zur Anwendung gelangt, die im Bereich der eigentlichen Gleitfläche mit einem speziell angebrachten Gleitschutz versehen ist, beispielsweise einem Gleitschuh aus PTFE.

### Ausführung der Erfindung

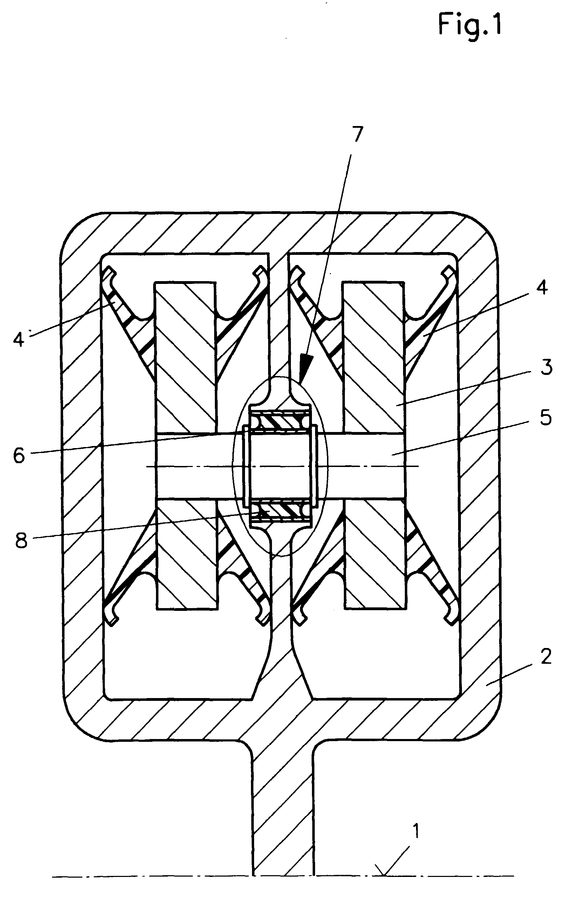

In der Zeichnung ist in halbgeschnittener Darstellung schematisch ein drehzahladaptiver Schwingungstilger wiedergegeben. Dieser wird normalerweise um eine Achse 1 rotierbar an einem Wellenende montiert und umfaßt ein Nabenteil 2, an dem eine Anzahl in Umfangsrichtung benachbarter Trägheitsmassen 3 auf Kurvenbahnen bewegbar sind. Die Kurvenbahnen sind der Achse 1 in Umfangsrichtung beiderseits zunehmend derart angenähert, daß sich bei Einleitung von Drehschwingungen eine Veränderung des Abstandes der Trägheitsmassen 3 von der Achse 1 ergibt. Bei rotierender Welle versuchen die Trägheitsmassen 3 fliehkraftbedingt auf den Kurvenbahnen jeweils diejenige Position einzunehmen, die den maximal erreichbaren Abstand von der Achse 1 hat. Sie werden, ausgehend von dieser Position, bei Einleitung von Drehschwingungen, die die Rotationsbewegung überlagern, durch eine Relativverschiebung auf den Kurvenbahnen zugleich in Umfangsrichtung und radial nach innen verlagert. Die dabei von den Trägheitsmassen 3 über die Kurvenbahnen auf das Nabenteil 2 ausgeübten Kräfte bewirken eine Schwingungstilgung. Diese ist optimal, wenn die anregende Frequenz bei gegebener Drehzal der Tilgereigenfrequenz entspricht. Dabei verändert sich bei dem drehzahladaptiven Tilger die Eigenfrequenz proportional zur Drehzal der Welle.

Bei der gezeigten Bauform sind die Trägheitsmassen 3 zusätzlich auf dem Nabenteil 2 durch Federelemente 4 in axialer Richtung federnd abgestützt, wodurch sich eine die vorstehend beschriebene Tilgerwirkung überlagernde Tilgerwirkung ergibt in bezug auf schwingungsbedingte Nickbewegungen des den Schwingungstilger tragenden Wellenendes. Die diesbezügliche Wirksamkeit tritt zwar nur in einem bestimmten Frequenzbereich auf, der bestimmt ist durch die Größe der Trägheitsmassen 3 und die Federrate der Federelemente 4. Da die diesbezüglichen Gesetzmäßigkeiten jedoch im Fachgebiet bekannt ist, bereitet es dem Fachmann keine Schwierigkeiten, die Dimensionierung so vorzunehmen, daß sich eine gute Tilgerwirkung im Resonanzbereich des den Schwingungstilger tragenden Wellenendes ergibt. Kritische Drehzahlbereiche können dadurch durchfahren werden, ohne daß die Gefahr einer Beschädigung der Welle besteht.

Bei dem gezeigten Ausführungsbeispiel sind die Federelemente 4 durch Gleitkufen aus Gummi gebildet, welche durch unmittelbares Anvulkanisieren mit den Trägheitsmassen 3 verbunden sind und das Nabenteil 2 im Bereich von die Achse 1 senkrecht umschließenden Kreisringflächen gleitend anliegend berühren. Bei Einleitung von die Rotationsbewegung des Schwingungstilgers überlagernden Drehschwingungen und Nickschwingungen sind die Trägheitsmassen 3 dadurch in der Lage, sich nicht nur in Umfangsrichtung und in radialer Richtung sondern zusätzlich in axialer Richtung gegen die Kraft einer Feder zu verschieben, bezogen auf das Nabenteil 2, wobei die Fliehkraft als Kraft verstanden wird, die maßgeblich durch elastische Eigenschaften charakterisiert ist. Sowohl bezogen auf die Drehschwingungen als auch bezogen auf die Nickschwingungen ergibt sich hierdurch eine Tilgerwirkung.

Die Trägheitsmassen 3 sind durch Bolzen 5 mit dem Nabenteil 2 verbunden. Der Bolzen 5 ist dabei in gegensinnig angeordneten Kurvenbahnen der Trägheitsmassen 3 einerseits und des Nabenteils 2 andererseits aufgenommen, die analog zu den entsprechenden Kurvenbahnen der DE PS 196 04 160 gestaltet sein können. Bei einer Relativverschiebung der Trägheitsmassen 3 in Umfangsrichtung ergibt sich dadurch eine Abrollbewegung der Bolzen 5 auf den Kurvenbahnen und eine zunehmende Annäherung der Trägheitsmassen 3 an die Achse 1, die somit der Richtung der darauf lastenden Fliehkräfte entgegengesetzt ist. Die resultierenden Kräfte werden zur Schwingungstilgung genutzt. Die Kurvenbahnen können auch einen Bestandteil von nierenförmigen Lagerschalen 6 bilden, die unabhängig erzeugt und nachträglich in das Nabenteil 2 und/oder in die Trägheitsmassen 3 eingefügt sind.

Bei dieser Bauform besteht auch die Möglichkeit, die konstruktive Ausbildung so vorzunehmen, daß die Bolzen 5 in den Lagerschalen 6 axial geführt abwälzbar sind und daß die Lagerschalen 6 gegen die Kraft von Federelementen 8 axial verschiebbar in den Trägheitsmassen 3 und/oder dem Nabenteil 2 aufgenommen sind. Ein solcher konstruktiver Gestaltungsvorschlag ist in dem Bereich 7 dargestellt. Die Ausführung hat in konstruktiver Hinsicht Vorteile.

Bei dem gezeigten Ausführungsbeispiel sind die Trägheitsmassen 3 von einer ringförmigen Kammer des Nabenteils 2 umschlossen. Hierdurch werden einerseits kreisringförmige Führungsflächen für die Trägheitsmassen 3 bereit gestellt, andererseits aber auch Rückwirkungen aus der Umgebung vermieden, die zu einer Beeinträchtigung der Relativbeweglichkeit der Trägheitsmassen 3 führen könnten.

Bei dem gezeigten Ausführungsbeispiel ist die ringförmige Kammer des Nabenteils 2 in zwei axial benachbarte Teilkammern unterteilt, in denen einander jeweils paarweise gegenüberliegend eine größere Anzahl von Trägheitsmassen 3 gleichmäßig in Umfangsrichtung verteilt ist. Als Alternative hierzu ist es möglich, die paarweise gegenüberliegenden Trägheitsmassen 3 in konstruktiver Hinsicht zusammenzufassen und die nierenförmige Lagerung des Bolzens 5 den Begrenzungswänden zuzuordnen, die die Kammer in axialer Richtung beiderseits nach außen begrenzen. Bei einer in funktioneller Hinsicht unveränderten Wirksamkeit läßt sich hierdurch das Leistungsgewicht vergrößern.

## Patentansprüche

1. Drehzahladaptiver Schwingungstilger für um eine Achse (1) rotierbare Wellen, umfassend ein Nabenteil (2), an dem eine Anzahl in Umfangsrichtung benachbarter Trägheitsmassen (3) auf Kurvenbahnen bewegbar sind, die der Achse (1) in Umfangsrichtung beiderseits zunehmend derart angenähert sind, daß sich bei Einleitung von Drehschwingungen eine Veränderung des Abstandes der Trägheitsmassen (3) von der Achse (1) ergibt, **dadurch gekennzeichnet**, daß die Trägheitsmassen (3) auf dem Nabenteil (2) durch Federelemente (4, 8) in axialer Richtung federnd abgestützt sind.

2. Schwingungstilger nach Anspruch 1, dadurch gekennzeichnet, daß die Trägheitsmassen (1) in axialer Richtung auf nur einer Seite durch Federelemente (4) abgestützt sind.

3. Schwingungstilger nach Anspruch 1, dadurch gekennzeichnet, daß die Trägheitsmassen (1) in axialer Richtung beiderseits durch Federelemente (4) abgestützt sind.

4. Schwingungstilger nach einem der Ansprüche 1 bis 3, dadurch gekennzeichnet, daß die Federelemente (4) durch Gleitkufen des Gehäuses und/oder der Trägheitsmassen (1) gebildet sind, die radial und in Umfangsrichtung verschiebbar auf den Trägheitsmassen bzw. dem Gehäuse abgestützt sind.

5. Schwingungstilger nach Anspruch 4, dadurch gekennzeichnet, daß die Gleitkufen aus polymerem Werkstoff bestehen.

6. Schwingungstilger nach Anspruch 4, dadurch gekennzeichnet, daß die Gleitkufen aus Metall bestehen.

7. Schwingungstilger nach einem der Ansprüche 1 bis 6, bei dem die Trägheitsmassen (3) durch achsparallele Bolzen (5) geführt sind, die bei Einleitung von Drehschwingungen in nierenförmigen Lagerschalen (6) des Nabenteils (2) und/oder der Trägheitsmassen (3) abwälzbar sind, dadurch gekennzeichnet, daß die Bolzen (5) in den Lagerschalen (6) axial geführt abwälzbar sind und daß die Lagerschalen (6) gegen die Kraft der Federelemente (8) axial verschiebbar in den Trägheitsmassen (3) und/oder dem Nabenteil (2) aufgenommen sind.

8. Schwingungstilger nach einem der Ansprüche 1 bis 7, dadurch gekennzeichnet, daß die Trägheitsmassen (3) in einer ringförmigen Kammer des Nabenteils (2) eingeschlossen sind.

9. Schwingungstilger nach Anspruch 1 bis 8, dadurch gekennzeichnet, daß die Trägheitsmassen (3) in axialer Richtung beiderseits von einem flanschartig gestalteten Bestandteil des Nabenteils (2) angeordnet sind.
